# EUROPEAN PATENT SPECIFICATION

(11) **EP 2 704 357 B1**
(45) Date of publication and mention of the grant of the patent: **14.02.2018**
(21) Application number: 12306045.1
(22) Date of filing: 31.08.2012
(51) Int. Cl.: H04L 12/24

(54) **CONFIGURING A DEVICE THROUGH A GATEWAY DEVICE**
KONFIGURATION EINER VORRICHTUNG DURCH EINE GATEWAY-VORRICHTUNG
CONFIGURATION D'UN DISPOSITIF À TRAVERS UNE PASSERELLE

(43) Date of publication of application: 05.03.2014
(73) Proprietor: ALCATEL LUCENT, 92100 Boulogne-Billancourt (FR)
(72) Inventor: Verbandt, Hugo, 2170 Merksem (BE); Michielsens, Jan, 2240 Zandhoven (BE); Cristallo, Geoffrey, 1190 Forest (BE)
(74) Representative: ALU Antw Patent Attorneys

(56) References cited:
- US-A1- 2007 201 508
- "Universal Plug and Play Device Architecture, UPnP, Version 1.0", INTERNET CITATION, 8 June 2000 (2000-06-08), XP002210614, Retrieved from the Internet: URL:http://www.upnp.org [retrieved on 2002-06-08]

## Description

### Field of the Invention

The present invention relates to the field of remote device management, and in particular to the field of remote device management by means of an object-directed remote device management protocol.

### Background

Object-directed remote device management protocols, such as TR-069 and OMA-DM, have been introduced to allow operators to manage gateways and the devices connected to those gateways in a standardized way. However, although gateways can be expected to operate and behave in a standardized way, the individual devices connected to such gateways are very diverse, and accordingly have diverse management and configuration needs. US 2007/201508 A1 relates to an architecture enabling a CWMP (Customer Premises Equipment WAN Management Protocol) managing entity to perform management operations on network managed entities not complying with said CWMP protocol. Such interworking is made possible through a conversion mechanism performed by a management proxy agent, whereby CWMP messages are converted back and forth from / to CWMP to / from a native protocol understood by the managed entity. It is therefore a disadvantage of object-directed remote device management protocols that specialized object models are required for every distinct device, and that these object models need to be updated as devices are replaced or upgraded.

### Summary

It is an object of embodiments of the present invention to address the above mentioned disadvantages. According to an aspect of the invention, there is provided a method as claimed in claim 1 for remote management of a target device coupled to a gateway apparatus, the method comprising at the gateway apparatus: receiving a message from a management server over a network; determining that the message pertains to device instruction data on the basis of an object identified in the message; extracting the device instruction data from the message; extracting target device information from the message; obtaining at least one device instruction corresponding to the device instruction data; and forwarding the at least one device instruction to a target device designated by the target device information; wherein the message is formatted in accordance with an object-directed remote device management protocol; and wherein the at least one device instruction is expressed in accordance with a management instruction set associated with the target device.

The method according to the invention has the advantage of allowing the management end point - i.e. the manager - to send any management or configuration command to the devices that are connected to the gateway. These devices are normally "hidden", in the sense that any management-related interaction with the outside world is supposed to happen by means of operations on objects that describe the internals of the devices in question. It is clear that this approach limits the set of interactions that can be deployed for a given device to those for which appropriate object attributes exist. Especially where devices are frequently upgraded, this is an impractical situation. The present invention is based *inter alia* on the inventive insight of the inventors that by defining a specific new object that represents the capability to send an enclosed or referenced command to a selected device, direct interaction can be established without formally leaving the object-based management framework. The actual commands or command structures are completely transparent for the host protocol and do not need to be interpreted.

In an embodiment of the method according to the present invention, the device instruction data includes the at least one device instruction.

Accordingly, the intended instruction for the device may simply be encapsulated or embedded in the message that is sent to the gateway. The gateway will then extract this instruction, and forward it to the targeted device. Commands sent in this manner may correspond to commands normally sent to the target device by means of a command line interface.

In an embodiment of the method according to the present invention, the device instruction data comprises a reference to a location of a file containing the at least one device instruction, and the method further comprises at the gateway apparatus: retrieving the file from the location; and extracting the at least one device instruction from the file.

This embodiment has the advantage of allowing the transmission of larger sets of commands, such as entire configuration scripts, to the target device. This effect is obtained by including in the message a reference to a location of the command file. This reference may be in the form of a Uniform Resource Identifier (URI).

In an embodiment of the method according to the present invention, the object-directed remote device management protocol is TR-069.

This embodiment has the advantage of reusing a protocol that is already widely deployed for gateways that are connected to a wired network.

In an embodiment of the method according to the present invention, the object-directed remote device management protocol is OMA-DM.

This embodiment has the advantage of reusing a protocol that is already widely deployed for gateways that are connected to a mobile network.

In an embodiment, the method according to the present invention further comprises at the gateway apparatus: receiving an instruction response from the target device; generating a response message in accordance with the instruction response; and forwarding the response message to the management server; and the response message is formatted in accordance with the object-directed remote device management protocol.

In this embodiment, the communication loop between the manager and the device is closed, in the sense that the manager is able to retrieve a response from the target device via the same path. This embodiment has the advantage of allowing full two-way interaction, such as would be possible by means of a command-line interface, without breaking the object-based management framework.

According to an aspect of the present invention, there is provided a computer program as claimed in claim 7. According to an aspect of the present invention, there is provided a gateway system, as claimed in claim 8, for configuring a device, the system comprising: one or more devices adapted to receive device instructions; a protocol agent, configured to receive a message from a management server over a network, and to extract target device information and device instruction data from the message; and an instruction generating agent, operatively connected to the protocol agent and to the at least one device, the instruction generating agent being configured to generate at least one device instruction in accordance with the device instruction data, and to forward the at least one device instruction to a target device of the one or more devices in accordance with the target device information; wherein the message is formatted in accordance with an object-directed remote device management protocol; and wherein the at least one device instruction is expressed in accordance with a management instruction set associated with the target device.

In an embodiment of the system according to the present invention, the instruction generating agent is configured to extract the at least one device instruction, included in the device instruction data, from the device instruction data.

In an embodiment of the system according to the present invention, the instruction generating agent is configured to retrieve a file containing the at least one device instruction from a location referenced in the device instruction data, and to extracting the at least one device instruction from the file.

In an embodiment of the system according to the present invention, the object-directed remote device management protocol is TR-069.

In an embodiment of the system according to the present invention, the object-directed remote device management protocol is OMA-DM.

In an embodiment of the system according to the present invention, the instruction generating agent is further configured to: receive an instruction response from the target device; generate a response message in accordance with the instruction response; and forward the response message to the management server; wherein the response message is formatted in accordance with the object-directed remote device management protocol.

In an embodiment, the system according to the present invention is comprised in a residential gateway.

The technical effects and advantages of the computer program, the system, and the residential gateway according to embodiments of the present invention correspond, *mutatis mutandis,* to those expressed above for the corresponding embodiments of the method according to the present invention.

### Brief Description of the Figures

Some embodiments of apparatus and/or methods in accordance with embodiments of the present invention are now described, by way of example only, and with reference to the accompanying drawings, in which:
Figure 1 presents a flow chart of an exemplary method according to an embodiment of the present invention; and
Figure 2 presents a schematic diagram of an exemplary system according to an embodiment of the present invention, and its connection to a management server.

### Description of Embodiments

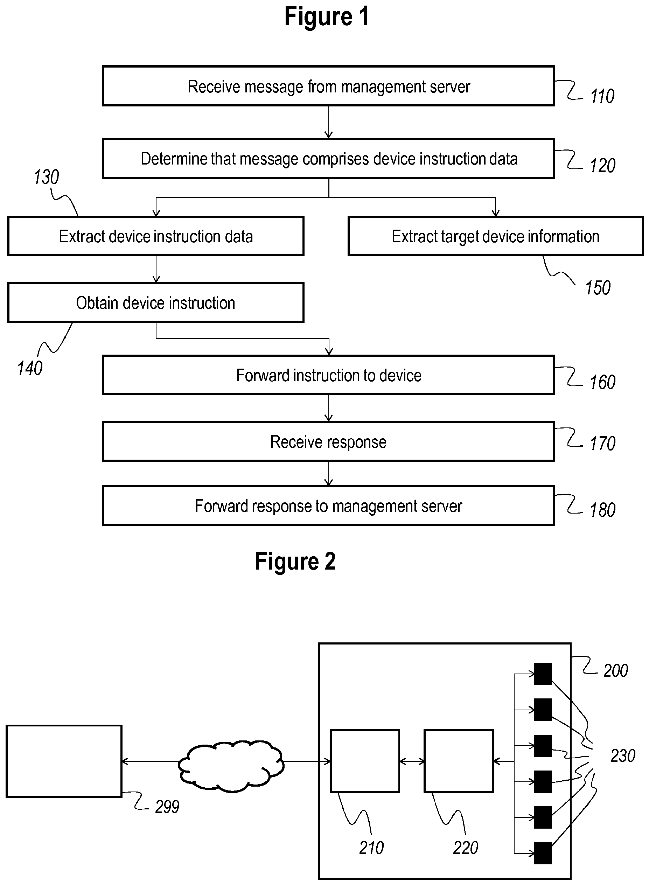

Figure 1 illustrates an exemplary method according to an embodiment of the present invention. The steps of the method will be described with reference to the gateway apparatus. Preferably, the gateway apparatus comprises a number of embedded devices, although the invention is also applicable to devices that are externally connected to the gateway apparatus.

In a first step **110,** the gateway receives a message from a management server over a network. As the gateway may receive messages pertaining to a variety of managed objects, it needs to determine in a second step **120** that the message pertains to device instruction data, i.e. data containing or referencing instructions to be directly relayed to a device, on the basis of an object identified in the message. If this is indeed the case, the device instruction data is extracted from the message in a third step **130** and the target device information is extracted from the message in a fourth step **140.** Steps **130** and **140** are illustrated as parallel steps, because neither one of them requires the completion of the other one to be carried out. A skilled person will understand that according to implementational constraints or preferences, these steps may also be carried out consecutively in any desired order.

At least one device instruction is obtained **140** in accordance with the device instruction data. The "obtaining" of the at least one device instruction may consist of extracting it from the message itself, or retrieving it from a source identified in the message (e.g. a server location identified by means of a URI). Finally, the at least one device instruction so obtained is forwarded **160** to the target device designated by the target device information.

The message is formatted in accordance with a hosted protocol which is an object-directed remote device management protocol, such as TR-069 or OMA-DM. The at least one device instruction is expressed in accordance with an embedded protocol, consisting of a management instruction set associated with the target device, such as a CLI command set. A concrete example is the ability to manage a wireless M2M module (embedded device) that is integrated on an M2M gateway (hosting device) by means of 'standard' AT commands (TS27.005 & TS27.007).

If two-way communication is desired, optional steps of receiving a response from the device **170** and forwarding the response to the manager **180** may be added. In analogy with the supply of instructions by means of a reference to a file on a file server, the response from the device may be uploaded to a file server, in which case it would suffice to return a reference to the file location to the management server.

Figure 2 illustrates an exemplary system **200** according to an embodiment of the present invention. The system comprises one or more devices **230** adapted to receive device instructions. Without lack of generality, six devices **230** are illustrated.

A protocol agent **210** is configured to receive a message from a management server **299** over a network via an appropriate interface (not shown), and to extract target device information and device instruction data from the message.

An instruction generating agent **220,** operatively connected to the protocol agent **210** and to the devices **230,** is configured to generate at least one device instruction in accordance with the device instruction data, and to forward the at least one device instruction to a target device **230** in accordance with the target device information.

The generating of the at least one device instruction may include retrieving an instruction file from a location which is identified in the message, e.g. a file server **289.**

The instruction generating agent **220** may be implemented as a software module in the hosted device **200** that communicates with the protocol agent **210** and possible a fileserver **289** (via the network) and with one or more embedded hardware components **230** via a propriety or well-defined embedded protocol. The embedded protocol used to communicate with the embedded hardware can be any type of standardized or proprietary protocol, or even a CLI command set. In this exemplary implementation, the instruction generating agent may comprise the following main functional software components:
- Hosted Client Interface adapter:
   o receive and send triggers to the hosted client (protocol agent **210**)
   o Read and write in the hosted client object tree

- File Transfer Interface:
   o Send and retrieve files from an external file server **289**
- Internal logic
- One or more embedded protocol adapter interfaces to allow communication with the embedded hardware devices **230**
   o Send and receive commands or commands structures to the embedded hardware devices **230**

In the context of the invention, the message is formatted in accordance with an object-directed remote device management protocol, and the protocol agent **210** is configured to correctly terminate this protocol. The at least one device instruction is expressed in accordance with a management instruction set associated with the target device **230.**

An example of a TR-069 object that is linked with an embedded device **230** and used to transport specific commands and returns back the result of these commands is provided below. In the absence of standardization of this mechanism, it is proposed to use a vendor-specific TR-069 model extension to provide the capability of signaling the application of the present method, and the associated parameters (device instruction data and target device information). Within the gateway system **200,** the object used for the instruction transport according to the present invention is preferably formally associated with the instruction generating agent **220.**

InternetGatewayDevice.Service.X_OUI_Embedded_CommandStructure
- NbrOfEmbeddedInterfaces
- Embedded_Interface{i}
   ∘ Enabled
      ▪ Boolean {false, true}
   ∘ EmbeddedInterfaceName
      ▪ StringS {telnet,snmp,AT,Zigbee,zwave,...}
   ∘ EmbeddedInterfaceVersion
      ▪ String8{a.b.c.d}
   ∘ EmbeddedInterfaceVendor
      ▪ String16{alcatel-lucent,...}
   ∘ EmbeddedInterfaceState
      ▪ String16{debug, error, active,inactive}
   ∘ Request
      ▪ CommandLineInputType
         - String16{string,url}
      ▪ CommandLineInputStructure
         - String1024
      ▪ CommandLineNbrOfArguments
         - unsignedint
   ∘ Result
      ▪ CommandLineResultReady
         - Boolean
      ▪ CommandLineResultType
         - String8{string,url}
      ▪ CommandLineResultString
         - String1024
      ▪ CommandLineNbrOfResultArguments
         - unsignedint
      ▪ CommandLineResult
         - String8{success,failure}
      ▪ CommandLineResultFailureCode
         - String16 {...}

The interfaces of the system are not explicitly shown in the figure, to keep the figure simple. The skilled person will appreciate that both the management server **299** and the system **200** according to the invention will have to include appropriate network interfaces. Likewise, the various components of the system **200** according to the invention exchange information over appropriate interfaces.

The term "interface" designates the necessary hardware and software required to establish data communication connectivity across the various layers of the protocol stack, as is well known to a person skilled in the art. Preferably, standardized protocols are used. An access interface may for instance include an interface for an xDSL, xPON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The scope of the invention is defined by the appended claims.

## Claims

1. A method for remote management of a target device coupled to a gateway apparatus, the method comprising at the gateway apparatus:
- receiving (110) a message from a management server over a network;
- determining (120) that said message pertains to device instruction data on the basis of an object identified in said message;
- extracting (130) said device instruction data from said message;
- extracting (150) target device information from said message;
- obtaining (140) at least one device instruction corresponding to said device instruction data; and
- forwarding (160) said at least one device instruction to a target device designated by said target device information; wherein said message is formatted in accordance with an object-directed remote device management protocol; and wherein said at least one device instruction is expressed in accordance with a management instruction set associated with said target device.

2. The method according to claim 1, wherein the device instruction data includes said at least one device instruction.

3. The method according to claim 1, wherein the device instruction data comprises a reference to a location of a file containing said at least one device instruction, said method further comprising at said gateway apparatus:
- retrieving said file from said location; and
- extracting said at least one device instruction from said file.

4. The method according to any of claims 1-3, wherein said object-directed remote device management protocol is TR-069.

5. The method according to any of claims 1-3, wherein said object-directed remote device management protocol is OMA-DM.

6. The method according to any of the preceding claims, further comprising at said gateway apparatus:
- receiving (170) an instruction response from said target device;
- generating a response message in accordance with said instruction response; and
- forwarding (180) said response message to said management server;
wherein said response message is formatted in accordance with said object-directed remote device management protocol.

7. A computer program comprising software means including instructions which, when executed by a processor, cause said processor to perform the method of any of the preceding claims.

8. A gateway system (200) for configuring a device, the system comprising:
- one or more devices (230) adapted to receive device instructions;
- a protocol agent (210), configured to receive a message from a management server (299) over a network, and to extract target device information and device instruction data from said message;
- an instruction generating agent (220), operatively connected to said protocol agent (210) and to said at least one device (230), said instruction generating agent (220) being configured to generate at least one device instruction in accordance with said device instruction data, and to forward said at least one device instruction to a target device of said one or more devices (230) in accordance with said target device information;
wherein said message is formatted in accordance with an object-directed remote device management protocol; and wherein said at least one device instruction is expressed in accordance with a management instruction set associated with said target device.

9. The system (200) according to claim 8, wherein said instruction generating agent (220) is configured to extract said at least one device instruction, included in said device instruction data, from said device instruction data.

10. The system (200) according to claim 8, wherein said instruction generating agent (220) is configured to retrieve a file containing said at least one device instruction from a location referenced in said device instruction data, and to extract said at least one device instruction from said file.

11. The system (200) according to any of claims 8-10, wherein said object-directed remote device management protocol is TR-069.

12. The system (200) according to any of claims 8-10, wherein said object-directed remote device management protocol is OMA-DM.

13. The system (200) according to any of claims 8-12, wherein said instruction generating agent (220) is further configured to:
receive an instruction response from said target device;
generate a response message in accordance with said instruction response; and
forward said response message to said management server (299) ;
wherein said response message is formatted in accordance with said object-directed remote device management protocol.

14. A residential gateway comprising the system (200) of any of claims 8-13.

## Patentansprüche

1. Verfahren für die Fernverwaltung von einer Zielvorrichtung, gekoppelt an eine Gateway-Vorrichtung, wobei das Verfahren an der Gateway-Vorrichtung umfasst:
- Empfangen (110) einer Nachricht von einem Verwaltungsserver über ein Netzwerk;
- Bestimmen (120), dass sich besagte Nachricht auf Vorrichtungs-Befehlsdaten bezieht, auf Grundlage von einem in besagter Nachricht identifizierten Objekt;
- Extrahieren (130) von besagten Vorrichtungs-Befehlsdaten aus besagter Nachricht;
- Extrahieren (150) von Zielvorrichtungsinformation aus besagter Nachricht;
- Erhalten (140) von mindestens einem Vorrichtungsbefehl entsprechend besagten Vorrichtungs-Befehlsdaten; und
- Weiterleiten (160) des mindestens einen Vorrichtungsbefehls an eine Zielvorrichtung, vorgesehen durch besagte Zielvorrichtungsinformation; wobei besagte Nachricht formatiert ist in Übereinstimmung mit einem objektbezogenen Fern-Vorrichtungsverwaltungsprotokoll; und wobei der mindestens eine Vorrichtungsbefehl ausgedrückt wird in Übereinstimmung mit einem Verwaltungsbefehlssatz, zugehörig zu besagter Zielvorrichtung.

2. Verfahren nach Anspruch 1, wobei die Vorrichtungs-Befehlsdaten den mindestens einen Vorrichtungsbefehl beinhalten.

3. Verfahren nach Anspruch 1, wobei die Vorrichtungs-Befehlsdaten eine Referenz auf den Speicherplatz einer Datei umfasst, welche den mindestens einen Vorrichtungsbefehl enthält, wobei besagtes Verfahren an besagter Gateway-Vorrichtung ferner umfasst:
- Abrufen besagter Datei aus besagtem Speicherplatz; und
- Extrahieren des mindestens einen Vorrichtungsbefehls aus besagter Datei.

4. Verfahren nach einem der Ansprüche 1-3, wobei besagtes objektbezogenes Fern-Vorrichtungsverwaltungsprotokoll TR-069 ist.

5. Verfahren nach einem der Ansprüche 1-3, wobei besagtes objektbezogenes Fern-Vorrichtungsverwaltungsprotokoll OMA-DM ist.

6. Verfahren nach einem beliebigen der vorstehenden Ansprüche, an besagter Gateway-Vorrichtung ferner umfassend:
- Empfangen (170) einer Befehlsantwort von besagter Zielvorrichtung;
- Erzeugen einer Antwortnachricht in Übereinstimmung mit besagter Befehlsantwort; und
- Weiterleiten (180) von besagter Antwortnachricht an besagten Verwaltungsserver; wobei besagte Antwortnachricht formatiert ist in Übereinstimmung mit besagtem objektbezogenen Fern-Vorrichtungsverwaltungsprotokoll.

7. Computerprogramm, umfassend Software-Mittel, die Befehle enthalten, welche, wenn sie von einem Prozessor ausgeführt werden, besagten Prozessor veranlassen, das Verfahren nach einem beliebigen der vorstehenden Ansprüche auszuführen.

8. Gateway-System (200) zum Konfigurieren einer Vorrichtung, wobei das System umfasst:
- ein oder mehrere Vorrichtungen (230), angepasst zum Empfangen von Vorrichtungsbefehlen;
- einen Protokollagenten (210), konfiguriert zum Empfangen einer Nachricht von einem Verwaltungsserver (299) über ein Netzwerk und zum Extrahieren von Zielvorrichtungsinformation und Vorrichtungs-Befehlsdaten aus besagter Nachricht;
- einen Befehlserzeugungsagenten (220), der wirksam mit besagtem Protokollagenten (210) und mit der mindestens einen Vorrichtung (230) verbunden ist, wobei besagter Befehlserzeugungsagent (220) konfiguriert ist zum Erzeugen von mindestens einem Vorrichtungsbefehl in Übereinstimmung mit besagten Vorrichtungs-Befehlsdaten und zum Weiterleiten von dem mindestens einen Vorrichtungsbefehl an eine Zielvorrichtung von besagter einen oder mehreren Vorrichtungen (230) in Übereinstimmung mit besagter Zielvorrichtungsinformation;
wobei besagte Nachricht formatiert ist in Übereinstimmung mit einem objektbezogenen Fern-Vorrichtungsverwaltungsprotokoll; und
wobei der mindestens eine Vorrichtungsbefehl ausgedrückt wird in Übereinstimmung mit einem Verwaltungsbefehlssatz, zugehörig zu besagter Zielvorrichtung.

9. System (200) nach Anspruch 8, wobei besagter Befehlserzeugungsagent (220) konfiguriert ist zum Extrahieren von dem mindestens einen Vorrichtungsbefehl, enthalten in besagten Vorrichtungs-Befehlsdaten, aus besagten Vorrichtungs-Befehlsdaten.

10. System (200) nach Anspruch 8, wobei besagter Befehlserzeugungsagent (220) konfiguriert ist zum Abrufen einer Datei, welche den mindestens einen Vorrichtungsbefehl enthält, von einem in besagten Vorrichtungs-Befehlsdaten referenzierten Speicherplatz, und zum Extrahieren des mindestens einen Vorrichtungsbefehls aus besagter Datei.

11. System (200) nach einem der Ansprüche 8-10, wobei besagtes objektbezogenes Fern-Vorrichtungsverwaltungsprotokoll TR-069 ist.

12. System (200) nach einem der Ansprüche 8-10, wobei besagtes objektbezogenes Fern-Vorrichtungsverwaltungsprotokoll OMA-DM ist.

13. System (200) nach einem der Ansprüche 8-12, wobei besagter Befehlserzeugungsagent (220) ferner konfiguriert ist zum:
Empfangen einer Befehlsantwort von besagter Zielvorrichtung; Erzeugen einer Antwortnachricht in Übereinstimmung mit besagter Befehlsantwort; und
zum Weiterleiten von besagter Antwortnachricht an besagten Verwaltungsserver (299);
wobei besagte Antwortnachricht formatiert ist in Übereinstimmung mit besagtem objektbezogenen Fern-Vorrichtungsverwaltungsprotokoll.

14. Lokales Gateway, umfassend das System (200) nach einem der Ansprüche 8-13.

## Revendications

1. Procédé de gestion à distance d'un dispositif cible couplé à un appareil de passerelle, le procédé comprenant au niveau de l'appareil de passerelle les étapes suivantes :
- recevoir (110) un message provenant d'un serveur de gestion sur un réseau ;
- déterminer (120) que ledit message appartient à des données d'instruction de dispositif sur la base d'un objet identifié dans ledit message ;
- extraire (130) dudit message lesdites données d'instruction de dispositif ;
- extraire (150) dudit message des informations du dispositif cible ;
- obtenir (140) au moins une instruction de dispositif correspondant auxdites données d'instruction de dispositif ; et
- transférer (160) ladite au moins une instruction de dispositif vers un dispositif cible désigné par lesdites informations du dispositif cible ;
dans lequel ledit message est formaté conformément à un protocole de gestion de dispositif à distance orienté objet ; et
dans lequel ladite au moins une instruction de dispositif est exprimée conformément à un ensemble d'instructions de gestion associé audit dispositif cible.

2. Procédé selon la revendication 1, dans lequel les données d'instruction de dispositif comprennent ladite au moins une instruction de dispositif.

3. Procédé selon la revendication 1, dans lequel les données d'instruction de dispositif comprennent une référence à un emplacement d'un fichier contenant ladite au moins une instruction de dispositif, ledit procédé comprenant en outre au niveau dudit appareil de passerelle les étapes suivantes :
- récupérer ledit fichier à partir dudit emplacement ; et
- extraire dudit fichier ladite au moins une instruction de dispositif.

4. Procédé selon l'une quelconque des revendications 1 à 3, dans lequel ledit protocole de gestion de dispositif à distance orienté objet est TR-069.

5. Procédé selon l'une quelconque des revendications 1 à 3, dans lequel ledit protocole de gestion de dispositif à distance orienté objet est OMA-DM.

6. Procédé selon l'une quelconque des revendications précédentes, comprenant en outre au niveau dudit appareil de passerelle les étapes suivantes :
- recevoir (170) une réponse d'instruction provenant dudit dispositif cible ;
- générer un message de réponse conformément à ladite réponse d'instruction ; et
- transférer (180) ledit message de réponse vers ledit serveur de gestion ;
dans lequel ledit message de réponse est formaté conformément audit protocole de gestion de dispositif à distance orienté objet.

7. Programme informatique comprenant des moyens logiciels contenant des instructions qui, lorsqu'elles sont exécutées par un processeur, entraînent l'exécution par ledit processeur du procédé selon l'une quelconque des revendications précédentes.

8. Système de passerelle (200) pour configurer un dispositif, le système comprenant :
- un ou plusieurs dispositifs (230) adaptés pour recevoir des instructions de dispositif ;
- un agent de protocole (210), configuré pour recevoir un message provenant d'un serveur de gestion (299) sur un réseau, et pour extraire dudit message des informations du dispositif cible et des données d'instruction de dispositif ;
- un agent de génération d'instruction (220), connecté de manière opérationnelle audit agent de protocole (210) et audit au moins un dispositif (230), ledit agent de génération d'instruction (220) étant configuré pour générer au moins une instruction de dispositif conformément auxdites données d'instruction de dispositif, et pour transférer ladite au moins une instruction de dispositif vers un dispositif cible dudit ou desdits dispositifs (230) conformément auxdites informations du dispositif cible ;
dans lequel ledit message est formaté conformément à un protocole de gestion de dispositif à distance orienté objet ; et
dans lequel ladite au moins une instruction de dispositif est exprimée conformément à un ensemble d'instructions de gestion associé audit dispositif cible.

9. Système (200) selon la revendication 8, dans lequel ledit agent de génération d'instruction (220) est configuré pour extraire ladite au moins une instruction de dispositif, incluse dans lesdites données d'instruction de dispositif, desdites données d'instruction de dispositif.

10. Système (200) selon la revendication 8, dans lequel ledit agent de génération d'instruction (220) est configuré pour récupérer un fichier contenant ladite au moins une instruction de dispositif dans un emplacement référencé dans lesdites données d'instruction de dispositif, et pour extraire dudit fichier ladite au moins une instruction de dispositif.

11. Système (200) selon l'une quelconque des revendications 8 à 10, dans lequel ledit protocole de gestion de dispositif à distance orienté objet est TR-069.

12. Système (200) selon l'une quelconque des revendications 8 à 10, dans lequel ledit protocole de gestion de dispositif à distance orienté objet est OMA-DM.

13. Système (200) selon l'une quelconque des revendications 8 à 12, dans lequel ledit agent de génération d'instruction (220) est en outre configuré pour :
recevoir une réponse d'instruction provenant dudit dispositif cible ;
générer un message de réponse conformément à ladite réponse d'instruction ; et
transférer ledit message de réponse vers ledit serveur de gestion (299) ;
dans lequel ledit message de réponse est formaté conformément audit protocole de gestion de dispositif à distance orienté objet.

14. Passerelle résidentielle comprenant le système (200) selon l'une quelconque des revendications 8 à 13.
